# EUROPEAN PATENT APPLICATION

(11) **EP 2 942 785 A1**
(43) Date of publication of application: **11.11.2015**
(21) Application number: 13870313.7
(22) Date of filing: 18.12.2013
(51) Int. Cl.: H01B 7/29, C08K 3/20, C08K 3/30, C08L 23/04, C08L 23/26, H01B 3/44, H01B 7/02

(54) **THERMALLY RESISTANT CROSSLINKED WIRE**

(30) Priority: 07.01.2013 JP 2013000413
(71) Applicant: Yazaki Corporation, Tokyo 108-0073 (JP)
(72) Inventor: TOUGE, Naoki, Susono-shi Shizuoka 410-1107 (JP)
(74) Representative: Hoffmann Eitle
(86) International application number: PCT/JP2013/083945
(87) International publication number: WO 2014/106928

(57) **Abstract**

The present invention provides a thermally resistant crosslinked wire in which a bromine-based flame retardant and a resin composition containing magnesium hydroxide are used, wherein flame retardancy and flexibility are ensured, and battery fluid resistance and abrasion resistance are excellent. The thermally resistant crosslinked wire comprises a high-density polyethylene, low-density polyethylene, an ethylenic copolymer, a resin made of an ethylenic copolymer denatured by an unsaturated carboxylic an-hydroxide, a bromine-based flame retardant, and magnesium hydroxide. The thermally resistant crosslinked wire is obtained by forming a coating layer using the resin composition, and crosslinking the coating layer, with which the periphery of a conductor is coated. In the resin composition, the total blending amount of the bromine-based flame retardant and magnesium hydroxide with respect to 100 parts by mass of the resin is in a range of 30 parts by mass to 55 parts by mass. The type D durometer harness (HDD) of the resin composition according to JIS K 7215 is in a range of 56 to 64. The specific gravity obtained using the water displacement method according to JIS K 7112 is in a range of 1.14 to 1.25.

## Description

### Technical Field

The present invention relates to a thermally resistant crosslinked electric wire, and particularly relates to a thermally resistant crosslinked polyethylene electric wire used for automobiles and the like.

### Background Art

Conventionally, a thermally resistant crosslinked flame-retardant polyethylene electric wire for automobiles has satisfied its flame retardance by adding a bromine-based flame retardant, antimony trioxide or metal hydrate into a resin composition (see, for example, Patent Literature 1).

Recently, it has been possible to provide an electric wire with improved flame retardance also by using a resin composition that contains an ethylene-based copolymer as a base, a bromine-based flame retardant, antimony trioxide and metal hydrate. Specifically, the electric wire is a flame-retardant insulated wire, in which circumference of a conductor is coated with a resin composition that contains, for example, 15 to 80 parts by mass of the bromine-based flame retardant excluding polybromo phenyl ether and polybromo biphenyl, 10 to 70 parts by mass of the antimony trioxide and 10 to 60 parts by mass of the metal hydrate with respect to 100 parts by mass of a resin component which mainly contains the ethylene-based copolymer, and the coating resin is crosslined (see, for example, Patent Literature 2).

Meanwhile, a non-halogen electric wire for automobiles has a problem of degrading its heat resistance when it coexists with a vinyl chloride electric wire, and in order to solve the problem, proposed has been a non-halogen crosslinked flame-retardant resin composition obtained by adding metal hydrate and a zinc-based compound into a resin component formed of a copolymer selected from: polyethylene; an α-olefin copolymer; an ethylene-vinyl ester copolymer; an ethylene-α,β-alkyl unsaturated carboxylate copolymer; and an ethylene-based thermoplastic elastomer, and then acid-modifying the above-described resin or allowing the resin to contain a certain functional group (see, for example, Patent Literature 3).

### Citation List

### Patent Literature

Patent Literature 1: JP 63-27543 A
Patent Literature 2: JP 2009-51918 A
Patent Literature 3: JP 2005-171172 A

### Summary of Invention

### Technical Problem

However, the technique described in Patent Literature 2 had below-listed drawbacks and problems, because the resin composition is simply based on the ethylene copolymer.
(1) The conventional electric wire is too flexible, and the electric wire in a region where a thickness of an insulator is 0.5 mm or less cannot satisfy scrape abrasion, even if satisfying the flame retardance.
(2) Because of adding a large amount of the metal hydrate, battery liquid resistance in accordance with ISO-6722 cannot be satisfied.

In addition, the technique described in Patent Literature 3 had the problem described above in (2), because of using the metal hydrate, in particular, magnesium hydroxide for the flame retardant as the non-halogen flame retardant. Similarly, it was impossible to satisfy the scrape abrasion.

The present invention is carried out in the light of the above-described conventional problems, and aims to provide a thermally resistant crosslinked electric wire having a coating layer formed of a resin composition containing a bromine-based flame retardant and magnesium hydroxide, which secures the flame retardance and the flexibility and has excellent battery liquid resistance and abrasion resistance.

The present invention solving the above mentioned problem is described below.
(1) A thermally resistant crosslinked electric wire obtained by forming a coating layer for coating a circumference of a conductor by a resin composition and crosslinking the coating layer, the resin composition includes a resin formed of high density polyethylene, low density polyethylene, an ethylene-based copolymer and an ethylene copolymer that is modified with unsaturated carboxylic acid anhydride, a bromine-based flame retardant, and magnesium hydroxide, a total blending amount of the bromine-based flame retardant and the magnesium hydroxide ranging from 30 to 55 parts by mass with respect to 100 parts by mass of the resin. Hardness of durometer type D (HDD) of the resin composition in accordance with JIS K 7215 ranges from 56 to 64, and specific gravity of the resin composition measured by a water substitution method in accordance with JIS K 7112 5 ranges from 1.14 to 1.25.
(2) The thermally resistant crosslinked electric wire according to (1), in which the resin composition contains 5 to 15 parts by mass of the bromine-based flame retardant and 15 to 40 parts by mass of the magnesium hydroxide with respect to 100 parts by mass of the resin that contains 45 to 75 parts by mass of the high density polyethylene, 5 to 45 parts by mass of the low density polyethylene, 5 to 35 parts by mass of the ethylene-based copolymer, and 5 to 35 parts by mass of the ethylene copolymer modified with the unsaturated carboxylic acid anhydride, and the total blending amount of the bromine-based flame retardant and the magnesium hydroxide ranges from 30 to 55 parts by mass.
(3) The thermally resistant crosslinked electric wire according to (1) or (2), in which the resin composition further contains 1 to 10 parts by mass of zinc sulfide with respect to 100 parts by mass of the resin.
(4) The thermally resistant crosslinked electric wire according to any one of (1) to (3), including 1 to 5 parts by mass of antimony trioxide as a flame-retardant auxiliary for the bromine-based flame retardant contained in the resin composition. Advantageous Effects of Invention

According to the present invention, provided can be a thermally resistant crosslinked electric wire having a coating layer formed of a resin composition containing a bromine-based flame retardant and magnesium hydroxide, which secures the flame retardance and the flexibility and has the excellent battery liquid resistance and abrasion resistance.

### Description of Embodiments

The thermally resistant crosslinked electric wire of the present invention is a thermally resistant crosslinked electric wire obtained by forming a coating layer for coating a circumference of a conductor by a resin composition and crosslinking the coating layer, the resin composition including: a resin formed of high density polyethylene, low density polyethylene, an ethylene-based copolymer and an ethylene copolymer modified with unsaturated carboxylic acid anhydride; a bromine-based flame retardant; and magnesium hydroxide, a total blending amount of the bromine-based flame retardant and the magnesium hydroxide ranging from 30 to 55 parts by mass with respect to 100 parts by mass of the resin, wherein hardness of durometer type D (HDD) of the resin composition in accordance with JIS K 7215 ranges from 56 to 64, and specific gravity of the resin composition measured by a water substitution method in accordance with JIS K 7112 5 ranges from 1.14 to 1.25.

Hereinafter, the respective components of the resin composition will be described in detail.

### [High Density Polyethylene]

The high density polyethylene used in the present invention is preferably blended to be within a range from 45 to 75 parts by mass, in light of obtaining sufficient abrasion resistance and flexibility. Particularly preferably, a blending amount of the high density polyethylene ranges from 55 to 65 parts by mass.

The high density polyethylene preferably has an MFR (190°C, 2.16 kg) ranging from 0.1 to 5.0 and hardness (Shore D) ranging from 60 to 80.

Incidentally, the high density polyethylene is polyethylene with density of 0.942 kg/m³ or more.

### [Low Density Polyethylene]

The low density polyethylene is preferably blended to be within a range from 5 to 45 parts by mass, in light of obtaining sufficient abrasion resistance and flexibility. Particularly preferably, a blending amount of the low density polyethylene ranges from 10 to 20 parts by mass.

As the low density polyethylene, a resin with an MFR (190°C, 2.16 kg) ranging from 0.4 to 2.0 and durometer hardness ranging from 50 to 60 is exemplified.

Incidentally, the low density polyethylene is polyethylene with density of 0.910 kg/ m³ or more and less than 0.942 kg/ m³.

A total blending amount of the high density polyethylene and the low density polyethylene is preferably within a range from 60 to 90 parts by mass, in light of obtaining sufficient abrasion resistance and flexibility. The total blending amount of the high density polyethylene and the low density polyethylene particularly preferably ranges from 70 to 75 parts by mass.

### [Ethylene-based Copolymer]

The ethylene-based copolymer is preferably blended to be within a range from 5 to 35 parts by mass, in light of obtaining sufficient abrasion resistance and flexibility. Particularly preferably, the ethylene-based copolymer is blended to be within a range from 15 to 20 parts by mass.

As the ethylene-based copolymer, exemplified are an ethylene/vinyl acetate copolymer, an ethylene/vinyl acetate/unsaturated carboxylic acid copolymer, an ethylene/ethylacrylate copolymer, an ethylene/methyl methacrylate copolymer, an ethylene/acrylic acid copolymer, an ethylene/methacrylic acid copolymer, an ethylene/maleic acid anhydride copolymer, an ethylene/aminoalkyl methacrylate copolymer, an ethylene/vinylsilane copolymer, an ethylene/glycidyl methacrylate copolymer, an ethylene/hydroxyethyl methacrylate copolymer and the like.

### [Maleic Acid-modified Ethylene Copolymer]

The ethylene copolymer modified with the unsaturated carboxylic acid anhydride is preferably blended to be within a range from 5 to 35 parts by mass, in light of obtaining sufficient abrasion resistance and flexibility. Particularly, the preferable blending amount ranges from 5 to 10 parts by mass.

Incidentally, the ethylene copolymer modified with the unsaturated carboxylic acid anhydride is not limited particularly as long as it is a graft-modified product obtained by graft-modifying an ethylene/unsaturated ester copolymer with the unsaturated carboxylic acid anhydride.

As the unsaturated ester, (meth)acrylic ester such as methyl acrylate, ethyl acrylate, isopropyl acrylate, n-butyl acrylate, isobutyl acrylate, 2-ethylhexyl acrylate, methyl methacrylate, ethyl methacrylate and isobutyl methacrylate, and vinyl ester such as vinyl acetate and vinyl propionate can be exemplified. As the unsaturated carboxylic acid anhydride used for the graft-modification, maleic acid anhydride, itaconic acid anhydride, norbornene dicarboxylic acid anhydride and the like can be exemplified, and in particular, maleic acid anhydride is preferably used.

In the present invention, the bromine-based flame retardant and the magnesium hydroxide as described below are blended so that the total blending amount thereof may be within a range from 30 to 55 parts by mass, with respect to 100 parts by mass of the resin formed of the high density polyethylene resin, the low density polyethylene resin, the ethylene-based copolymer and the maleic acid-modified ethylene copolymer which are described above. Hereinafter, the respective components will be described.

### [Bromine-based Flame Retardant]

The bromine-based flame retardant is preferably blended to be within a range from 5 to 15 parts by mass, in light of obtaining the sufficient flame retardance and abrasion resistance. Particularly preferably, the blending amount of the bromine-based flame retardant ranges from 5 to 9 parts by mass.

As the bromine-based flame retardant, exemplified are hexabromobenzene, ethylenebis-dibromo norbornane dicarboximide, ethylenebis-tetrabromo phthalimide, tetrabromobisphenol-S, tris(2,3-dibromopropyl-1)isocyanurate, hexabromocyclododecane (HBCD), octabromophenyl ether, a tetrabromobisphenol-A (TBA) epoxy oligomer or polymer, TBA-bis(2,3-dibromopropyl ether), decabromodiphenyl oxide, polydibromophenylene oxide, bis(tribromophenoxy)ethane, ethylenebis-pentabromobenzene, dibromoethyl-dibromocyclohexane, dibromoneopentylglycol, tribromophenol, tribromophenol allyl ether, tetradecabromo-diphenoxybenzene, 2,2-bis(4-hydroxy-3,5-dibromophenyl)propane, 2,2-bis(4-hydroxyethoxy-3,5-dibromophenyl)propane, pentabromophenol, pentabromotoluene, pentabromodiphenyl oxide, hexabromodiphenyl ether, octabromodiphenyl ether, octabromodiphenyl oxide, dibromoneopentylglycol tetracarbonate, bis(tribromophenyl)fumaramide, N-methylhexabromophenylamine and combination thereof.

### [Magnesium Hydroxide]

The magnesium hydroxide is preferably blended to be within a range from 15 to 40 parts by mass, in light of obtaining the sufficient flame retardance and battery liquid resistance. In particular, the blending amount of the magnesium hydroxide preferably ranges from 20 to 40 parts by mass.

Since a decomposition temperature of magnesium hydroxide is about 300°C, in the production of the thermally resistant crosslinked electric wire of the present invention, it is possible enough to extrude the resin composition at a high temperature of 200°C or more to coat the conductor for forming the insulating layer.

As another metal hydroxide having the excellent flame retardance, aluminum hydroxide is known. However, in the case of blending the aluminum hydroxide, since its decomposition starts at about 180°C, an extruding temperature is necessarily set to be low, and the number of revolutions of the extruder cannot be increased, so that it is difficult to enhance the productivity of the electric wire and the cable.

As described above, the bromine-based flame retardant and the magnesium hydroxide are preferably blended so that the total blending amount thereof may be within a range from 30 to 55 parts by mass, for obtaining the sufficient flame retardance, abrasion resistance and battery liquid resistance. The total blending amount more preferably ranges from 30 to 55 parts by mass, and further preferably ranges from 40 to 50 parts by mass.

### [Antimony Trioxide]

In the present invention, 1 to 5 parts by mass of antimony trioxide is further preferably contained as a flame-retardant auxiliary for the bromine-based flame retardant contained in the resin composition, and more preferably, 2 to 5 parts by mass of the antimony trioxide is contained. If the blending amount of the antimony trioxide is within a range from 1 to 5 parts by mass, the flame retardance can be improved while suppressing the degradation of the abrasion resistance.

### [Zinc Sulfide]

In the present invention, in light of obtaining accommodativeness accommodativeness with the other material, in particular, a vinyl chloride-based resin composition, zinc sulfide is preferably blended to be within a range from 1 to 10 parts by mass, and more preferably from 1 to 8 parts by mass, with respect to 100 parts by mass of the above-described resin.

### [Other Components]

In the thermally resistant crosslinked electric wire of the present invention, other than the above-described essential components, an antioxidant, a metal deactivator, other age resister, a lubricant, a filler and a reinforcing material, a UV absorber, a stabilizer, a plasticizer, a pigment, a dye, a colorant, an antistatic agent, a foaming agent and the like may be blended as long as they do not disturb the effects of the present invention.

In the present invention, the hardness of durometer type D (HDD) of the above-described resin composition in accordance with JIS K 7215 ranges from 56 to 64, and the specific gravity of the resin composition measured by the water substitution method in accordance with JIS K 7112 5 ranges from 1.14 to 1.25.

If the hardness is less than 56, the abrasion resistance is insufficient, and if the hardness is more than 64, the flexibility is insufficient. The hardness preferably ranges from 58 to 63, and more preferably ranges from 59 to 62.

Moreover, if the specific gravity is less than 1.14, the flame retardance is insufficient, and if the specific gravity is more than 1.25, the abrasion is insufficient.

The thermally resistant crosslinked electric wire of the present invention is obtained by forming the coating layer for coating the circumference of the conductor by the resin composition that contains the above-described components, and crosslinking the coating layer. That is, the resin composition of the present invention is firstly melt and mixed with the various kinds of additives as desired according to the usual method, and the thus obtained composition is subjected to an extruder or the like according to the usual method to form the coating layer on the circumference of the conductor. As the mixing means for the composition, a compoundable equipment such as the extruder, a Henschel mixer, a kneader, an axial kneader, a Banbury mixer and a roll mill can be used.

After forming the coating layer as described above, the coating layer is crosslinked. By crosslinking the coating layer, intermolecular chemical connection can be formed in a linear polymer to construct a network structure (a three-dimensional structure), thereby improving the strength, the thermal resistance and the like of the coating layer.

The method for the crosslinkage is not limited particularly, and for example, exemplified are an electron beam crosslinking method, wherein the coating layer is irradiated with electron beams after being molded, and a so-called chemical crosslinking method, wherein a crosslinking agent is blended into the resin composition in advance and is heated after being molded to be crosslinked, and the like.

In the case of adopting the electron beam crosslinking method, an exposure dose of the electron beams preferably ranges from 1 to 30 Mrad. For crosslinking the coating layer more efficiently, a methacrylate-based compound such as trimethylolpropane triacrylate, an allyl-based compound such as triallyl cyanurate, a maleimide-based compound or a polyfunctional compound such as a divinyl-based compound may be added as a crosslinking aid.

In the case of adopting the chemical crosslinking method, organic peroxide such as hydroperoxide, dialkyl peroxide, diacyl peroxide, peroxy ester, ketone peroxyester and ketone peroxide is preferably used as the crosslinking agent.

### Examples

Hereinafter, more specific explanation of the present invention will be provided by way of Examples, but the present invention is not limited to the below-described Examples.

### [Examples 1 to 7, Comparative Examples 1 to 10]

### <Preparation of Resin Composition for Thermally Resistant Electric Wire>

In the respective examples and comparative examples, respective blending amounts (part by mass) of respective components listed in Tables 1 and 2 were melted and kneaded by using a Wonder kneader to prepare resin compositions. Incidentally, as the respective component materials shown in Tables 1 and 2, materials listed in Table 3 were used.

Each of the prepared resin compositions was tested for measuring its hardness of durometer type D (HDD) in accordance with JIS K 7215 by using a test piece, which is obtained by press-molding the resin composition at a temperature of 175°C to form a sheet of 2 mm and cutting the sheet to form the test piece with a width of 60 mm and a length of 30 mm. Results of the measurements thereof are shown in the items of "Hardness" in Tables 1 and 2.

Moreover, each of the resin composition was tested for measuring its specific gravity by a water substitution method in accordance with JIS K 7112 5 by using a test piece, which is obtained by press-molding the resin composition at a temperature of 175°C to form a sheet of 2 mm and cutting the sheet to form the test piece with a width of 60 mm and a length of 30 mm. Results of the measurements thereof are shown in the items of "Specific Gravity" in Tables 1 and 2.

**[Table 1]**

| | | Example 1 | Example 2 | Example 3 | Example 4 | Example 5 | Example 6 | Example 7 |
|---|---|---|---|---|---|---|---|---|
| High density polyethylene (HDPE) | | 45 | 50 | 55 | 60 | 65 | 65 | 75 |
| Low density polyethylene (LDPE) | | 45 | 20 | 5 | 10 | 15 | 20 | 5 |
| *Total blending amount of HDPE and LDPE | | 90 | 70 | 60 | 70 | 80 | 85 | 80 |
| Ethylene-based copolymer | | 5 | 25 | 5 | 25 | 15 | 10 | 15 |
| Maleic acid-modified ethylene copolymer | | 5 | 5 | 35 | 5 | 5 | 5 | 5 |
| Bromine-based flame retardant | | 15 | 15 | 15 | 15 | 5 | 15 | 15 |
| Magnesium hydroxide | | 20 | 40 | 40 | 25 | 30 | 15 | 40 |
| *Total blending amount of bromine-based flame retardant and magnesium hydroxide | | 35 | 55 | 55 | 40 | 35 | 30 | 55 |
| Antimony trioxide | | 5 | 5 | 5 | 5 | 5 | 5 | 5 |
| Crosslinking treatment | | Done | Done | Done | Done | Done | Done | Done |
| Properties | Hardness | 56 | 56 | 57 | 58 | 60 | 60 | 62 |
| | Specific gravity | 1.16 | 1.24 | 1.24 | 1.18 | 1.14 | 1.14 | 1.24 |
| | Abrasion resistance | ○ | ○ | ○ | ○ | ○ | ○ | ○ |
| | Flexibility | ○ | ○ | ○ | ○ | ○ | ○ | ○ |
| | Battery liquid resistance | ○ | ○ | ○ | ○ | ○ | ○ | ○ |
| | Flame retardance | ○ | ⊚ | ⊚ | ○ | ○ | ○ | ⊚ |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| High density polyethylene (HDPE) | | 45 | 45 | 50 | 80 | 60 | 50 | 40 | 45 | 50 | 65 |
| Low density polyethylene (LDPE) | | 30 | 35 | 10 | 10 | 15 | 15 | 25 | 5 | 5 | 10 |
| *Total blending amount of HDPE and LDPE | | 75 | 80 | 60 | 90 | 75 | 65 | 65 | 50 | 55 | 75 |
| Ethylene-based copolymer | | 15 | 5 | 15 | 5 | 20 | 20 | 5 | 40 | 5 | 20 |
| Maleic acid-modified ethylene copolymer | | 15 | 15 | 25 | 5 | 5 | 15 | 30 | 10 | 40 | 5 |
| Bromine-based flame retardant | | 15 | 10 | 10 | 5 | 20 | 5 | 15 | 15 | 5 | 25 |
| Magnesium hydroxide | | 10 | 20 | 40 | 35 | 40 | 40 | 30 | 15 | 45 | 30 |
| *Total blending amount of bromine-based flame retardant and magnesium hydroxide | | 25 | 30 | 50 | 40 | 60 | 45 | 45 | 30 | 50 | 55 |
| Antimony trioxide | | 5 | 5 | 5 | 5 | 3 | 5 | 5 | 5 | 5 | 5 |
| Crosslinking treatment | | Done | Done | Done | Done | Done | Not Done | Done | Done | Done | Done |
| properties | Hardness | 54 | 55 | 55 | 65 | 56 | 56 | 54 | 54 | 55 | 59 |
| | Specific gravity | 1.12 | 1.13 | 1.21 | 1.17 | 1.28 | 1.19 | 1.20 | 1.14 | 1.20 | 1.26 |
| | Abrasion resistance | × | × | × | ○ | × | × | × | × | × | × |
| | Flexibility | ○ | ○ | ○ | × | ○ | ○ | ○ | ○ | ○ | ○ |
| | Battery liquid resistance | ○ | ○ | ○ | ○ | ○ | ○ | ○ | ○ | × | ○ |
| | Flame retardance | × | × | ⊚ | ○ | ⊚ | ○ | ⊚ | ○ | ○ | ⊚ |

**[Table 3]**

| Each component | Product name | Manufacturer | Remarks |
|---|---|---|---|
| High density polyethylene (HDPE) | NOVATEC HD HB 122R | Japan Polyethylene Corporation | |
| Low density polyethylene (LDPE) | NOVATEC LD LF122 | Japan Polyethylene Corporation | |
| Ethylene-based copolymer | NUC6510 | Nippon Unicar Company Limited | Content of ethyl acrylate: 22 % by mass |
| Maleic acid-modified ethylene copolymer | BONDINE LX-4110 | Du Pont Kabushiki Kaisha | |
| Bromine-based flame retardant (1,2-bis (bromophenyl) ethane) | SAYTEX 8010 | Albemarle Corporation | |
| Antimony trioxide | Antimony trioxide | Nihon Seiko Co., LTD. | |
| Magnesium hydroxide | KISUMA 5AL | Kyowa Chemical Industry Co., Ltd. | Processed product of stearic acid |

### <Production of Thermally Resistant Crosslinked Electric Wire>

By using the resin compositions for the thermally resistant electric wires of the above-described respective examples and comparative examples, respective coated electric wires were obtained. That is, each of the resin compositions was subjected to extrusion molding under a temperature condition of 190°C by using a coating extruder for electric wire production, so as to form an electric wire with an outer diameter of 1.3 mm including its coating layer around a core wire (nineteen twisted wires) with a diameter of 0.15 mm, whereby the respective coated electric wires were obtained in the examples and comparative examples. The thus obtained coated electric wires were subjected to electron beam-crosslinking treatments (10 Mrad) to crosslink the coating layers.

### <Evaluation of Thermally Resistant Crosslinked Electric Wire>

The obtained thermally resistant crosslinked electric wire was tested for evaluating its battery liquid resistance, flame retardance, abrasion test and flexibility, and obtained results are shown in Tables 1 and 2. The respective evaluations were carried out as follows.

### (1) Battery Liquid Resistance

The battery liquid resistance was evaluated in accordance with ISO-6722 as a standard for acid resistance in an engine room, which is required as an electric wire for automobiles.

After pouring a small amount of battery liquid on the above-obtained thermally resistant crosslinked electric wire, the thermally resistant crosslinked electric wire was kept in an oven at 90°C for 8 hours; was subsequently taken out from the oven and was showered with the acid again, which was then kept in the oven at 90°C again for 16 hours (totally 24 hours); and was thereafter taken out from the oven (one cycle was completed). After repeating these procedures totally two cycles, the thermally resistant crosslinked electric wire was wound around a mandrel with a diameter of 6.5 mm. In the case where the thus wound thermally resistant crosslinked electric wire could endure a voltage (1 kV × 1 min), it was evaluated as "Pass (○)", and in the case of not enduring the voltage, it was evaluated as "Fail (×)".

### (2) Flame Retardance

A sample of the thermally resistant crosslinked electric wire with a length of 600 mm or more was prepared for evaluating the flame retardance. The sample was fixed to be inclined by 45°, and reducing flame was applied to a part of the sample at 500 mm ± 5 mm from its upper end for 15 seconds by using a Bunsen burner. In the case where the flame was distinguished within less than 10 seconds after the application, the thermally resistant crosslinked electric wire was evaluated as "Excellent (⊚)"; in the case where the flame was extinguished from 40 to 70 seconds inclusive from the thus application, it was evaluated as "Pass (○)"; and in the case of the other, it was evaluated as "Fail (×)".

### (3) Abrasion Test

An abrasion test (a load of 7 N) was carried out by using a scrape abrasion test apparatus. That is, the thermally resistant crosslinked electric wire with a length of about 1 m was placed on a sample holder, and was fixed thereon with a clamp. Then, a flange provided with a piano wire whose diameter was 0.45 mm was allowed to reciprocate (a reciprocation distance of 14 mm), while being pushed onto a tip of the thermally resistant crosslinked electric wire with a total load of 7 N by using a press. The number of the reciprocations until the coating layer of the thermally resistant crosslinked electric wire was worn and the piano wire of the flange became in contact with the conductor of the thermally resistant crosslinked electric wire was measured. In the case where the number was 100 or more, it was evaluated as "Pass (○)", and in the case of less than 100, it was evaluated as "Fail (×)".

### (4) Flexibility

A sample of the thermally resistant crosslinked electric wire with a length of 100 mm was prepared for evaluating its flexibility. A deflection load of the electric wire was measured by using a force gauge. In the case where the measurement value was 0.30 N or less, it was evaluated as "Pass (○)", and in the case of more than 0.30 N, it was evaluated as "Fail (×)".

As shown in Tables 1 and 2, it can be realized that good results were obtained in any of the abrasion resistance, the flexibility, the battery resistance and the flame retardance in Examples 1 to 7, but on the other hand, all of the battery resistance, the flame retardance, the abrasion resistance and the flexibility could not be satisfied at the same time in Comparative Examples 1 to 5 and 7 to 10, wherein either the hardness or the specific gravity is out of the range specified by the present invention. Moreover, in Comparative Example 6, in which the hardness and the specific gravity are within the ranges specified by the present invention but the coating layer was not subjected to the crosslinking treatment, the abrasion resistance was poor.

### [Examples 8 to 11, Comparative Examples 11 to 14]

### <Preparation of Resin Composition for Thermally Resistant Electric Wire - Production of Thermally Resistant Crosslinked Electric Wire - Evaluation>

In the respective examples and comparative examples, respective blending amounts (part by mass) of respective components listed in Tables 4 and 5 were melted and kneaded by using a Wonder kneader to prepare resin compositions. Incidentally, as the respective component materials shown in Tables 4 and 5, materials listed in Table 6 were used.

Thereafter, by using each of the resin compositions obtained in the respective examples and comparative examples, a thermally resistant crosslinked electric wire was obtained similarly to Example 1.

Moreover, each of the thus obtained thermally resistant crosslinked electric wire was tested for evaluating its battery liquid resistance, flame retardance, abrasion test, flexibility and accommodativeness, and obtained results were shown in Tables 4 to 6. Incidentally, the battery liquid resistance, the flame retardance, the abrasion test and the flexibility were evaluated similarly to Example 1, and the accommodativeness was evaluated as follows.

### [Evaluation of Accommodativeness]

In the respective examples and comparative examples, five PVC electric wires, which is obtained by extruding polyvinyl chloride (PVC) as an insulated coating material to coat a circumference of the conductor, and two thermally resistant crosslinked wires were bundled to form a mixed electric wire bundle. Subsequently, after coating a circumference of this mixed electric wire bundle with a PVC sheet as a wire harness protective material, a PVC tape as the wire harness protective material was further wound around an end of this PVC sheet five times, thereby producing a wire harness. Then, after aging this wire harness under a condition of 130°C × 500 hours, the thermally resistant crosslinked wire was taken out from the mixed electric wire bundle. If no crack was generated in the coating layers in both of two thermally resistant crosslinked wires by being wound around its diameter, it was evaluated as "Pass (○)", and if any crack is generated in either of them, it was evaluated as "Fail (×)".

**[Table 4]**

| | | Example 8 | Example 9 | Example 10 | Example 11 |
|---|---|---|---|---|---|
| High density polyethylene (HDPE) | | 45 | 55 | 65 | 75 |
| Low density polyethylene (LDPE) | | 45 | 5 | 20 | 5 |
| Ethylene-based copolymer | | 5 | 5 | 10 | 15 |
| Modified EEA | | 5 | 35 | 5 | 5 |
| Bromine-based flame retardant | | 15 | 15 | 15 | 15 |
| Magnesium hydroxide | | 20 | 40 | 15 | 40 |
| *Total blending amount of bromine-based flame retardant and magnesium hydroxide and magnesium hydroxide | | 35 | 55 | 30 | 55 |
| Zinc sulfide | | I | 3 | 8 | 5 |
| Antimony trioxide | | 5 | 5 | 5 | 5 |
| Crosslinking treatment | | Done | Done | Done | Done |
| Properties | Hardness | 56 | 57 | 61 | 62 |
| | Specific gravity | 1.16 | 1.24 | 1.15 | 1.24 |
| | Abrasion resistance | ○ | ○ | ○ | ○ |
| | Flexibility | ○ | ○ | ○ | ○ |
| | Battery liquid resistance | ○ | ○ | ○ | ○ |
| | Flame retardance | ○ | ○ | ○ | ○ |
| | Accommodativeness | ○ | ○ | ○ | ○ |

**[Table 5]**

| | | Comparative Example 11 | Comparative Example 12 | Comparative Example 13 | Comparative Example 14 |
|---|---|---|---|---|---|
| High density polyethylene (HDPE) | | 20 | 45 | 80 | 70 |
| Low density polyethylene (LDPE) | | 45 | 50 | 10 | 10 |
| Ethylene-based copolymer | | 15 | - | 5 | 5 |
| Modified EEA | | 20 | 5 | 5 | 15 |
| Bromine-based flame retardant | | 5 | 10 | 10 | 5 |
| Magnesium hydroxide | | 40 | 20 | 25 | 45 |
| *Total blending amount of bromine-based flame retardant and magnesium hydroxide and magnesium hydroxide | | 45 | 30 | 35 | 50 |
| Zinc sulfide | | 5 | 5 | 0.5 | 15 |
| Antimony trioxide | | 5 | 2 | 4 | 2 |
| Crosslinking treatment | | Done | Done | Done | Done |
| Properties | Hardness | 51 | 56 | 65 | 65 |
| | Specific gravity | 1.19 | 1.13 | 1.18 | 1.22 |
| | Abrasion resistance | × | ○ | ○ | ○ |
| | Flexibility | ○ | x | × | ○ |
| | Battery liquid resistance | ○ | ○ | ○ | × |
| | Flame retardance | ○ | ○ | ○ | ○ |
| | Accommodativeness | ○ | × | × | × |

**[Table 6]**

| Each component | Product name | Manufacturer | Remarks |
|---|---|---|---|
| High density polyethylene (HDPE) | NOVATEC HD HB122R | Japan Polyethylene Corporation | |
| Low density polyethylene (LDPE) | NOVATEC LD LF122 | Japan Polyethylene Corporation | |
| Ethylene-based copolymer | NUC6510 | Nippon Unicar Company Limited | Content of ethyl acrylate: 22 % by mass |
| Maleic acid-modified HDPE | MODIC H502 | | |
| Maleic acid-modified LDPE | MODIC L503 | | |
| Maleic acid-modified ethylene copolymer | BONDINE LX-41 10 | Du Pont Kabushiki Kaisha | |
| Bromine-based flame retardant(1,2-bis (bromophenyl) ethane) | SAYTEX 8010 | Albemarle Corporation | |
| Antimony trioxide | Antimony trioxide | Nihon Seiko Co., LTD. | |
| Magnesium hydroxide | KISUMA 5AL | Kyowa Chemical Industry Co., Ltd. | Processed product of stearic acid |
| Zinc sulfide | Sachtolith HD | Produced by Sachtleben | |

As shown in Tables 4 and 5, it can be realized that good results were obtained in any of the abrasion resistance, the flexibility, the battery resistance, the flame retardance and the accommodativeness in Examples 8 to 11, but on the other hand, all of the abrasion resistance, the flexibility, the battery resistance, the flame retardance and the accommodativeness could not be satisfied at the same time in comparative Examples 11 to 14, in which either the hardness or the specific gravity is out of the range specified by the present invention.

## Claims

1. A thermally resistant crosslinked electric wire obtained by forming a coating layer for coating a circumference of a conductor by a resin composition and crosslinking the coating layer, the resin composition comprising:
a resin formed of high density polyethylene, low density polyethylene, an ethylene-based copolymer and an ethylene copolymer that is modified with unsaturated carboxylic acid anhydride;
a bromine-based flame retardant; and
magnesium hydroxide, a total blending amount of the bromine-based flame retardant and the magnesium hydroxide ranging from 30 to 55 parts by mass with respect to 100 parts by mass of the resin, wherein
hardness of durometer type D (HDD) of the resin composition in accordance with JIS K 7215 ranges from 56 to 64, and
specific gravity of the resin composition measured by a water substitution method in accordance with JIS K 7112 5 ranges from 1.14 to 1.25.

2. The thermally resistant crosslinked electric wire according to claim 1, wherein
the resin composition contains 5 to 15 parts by mass of the bromine-based flame retardant and 15 to 40 parts by mass of the magnesium hydroxide with respect to 100 parts by mass of the resin that contains 45 to 75 parts by mass of the high density polyethylene, 5 to 45 parts by mass of the low density polyethylene, 5 to 35 parts by mass of the ethylene-based copolymer, and 5 to 35 parts by mass of the ethylene copolymer modified with the unsaturated carboxylic acid anhydride, and
the total blending amount of the bromine-based flame retardant and the magnesium hydroxide ranges from 30 to 55 parts by mass.

3. The thermally resistant crosslinked electric wire according to claim 1 or 2, wherein the resin composition further contains 1 to 10 parts by mass of zinc sulfide with respect to 100 parts by mass of the resin.

4. The thermally resistant crosslinked electric wire according to any one of claims 1 to 3, comprising 1 to 5 parts by mass of antimony trioxide as a flame-retardant auxiliary for the bromine-based flame retardant contained in the resin composition.
